**Europäisches Patentamt**

**European Patent Office**

**Office européen des brevets**

(19)

(11) Numéro de publication: **0 189 695 B1**

(12)

# FASCICULE DE BREVET EUROPEEN

(45) Date de publication du fascicule du brevet:
**20.09.89**

(21) Numéro de dépôt: **85402521.0**

(22) Date de dépôt: **17.12.85**

(51) Int. Cl.⁴: **H04B 7/26**, H04Q 7/04

(54) **Système de radiocommunications à sauts de fréquence lents et à protocole mixte d'attribution de séquences.**

(30) Priorité: **28.12.84 FR 8420009**

(43) Date de publication de la demande:
**06.08.86 Bulletin 86/32**

(45) Mention de la délivrance du brevet:
**20.09.89 Bulletin 89/38**

(84) Etats contractants désignés:
**DE FR GB IT SE**

(56) Documents cités:
**EP-A- 0 097 579**

**L'ONDE ELECTRIQUE,
vol. 64, no. 3, mai-juin 1984, pages 22-28, Paris, FR; M. MOULY et al.: "Etude comparative de quelques protocoles d'accès multiple pour les systèmes radio mobiles"
IEEE TRANSACTIONS ON VEHICULAR TECHNOLOGY, vol. VT-33, no. 3, août 1984, pages 179-190, New York, US; D. VERHULST et al.: "Slow frequency hopping multiple access for digital cellular radiotelephone"
IEEE TRANSACTIONS ON VEHICULAR TECHNOLOGY, vol. VT-32, no. 1, février 1983, pages 98-105, New York, US; O-H. YUE: "Spread spectrum mobile radio, 1977-1982"
L'ONDE ELECTRIQUE,**

(73) Titulaire: **ETAT FRANCAIS représenté par le Ministre des PTT (Centre National d'Etudes des Télécommunications), 38-40 rue du Général Leclerc, F-92131 Issy-les-Moulineaux(FR)**

(72) Inventeur: **Mouly, Michel, 365 rue de Vaugirard, F-75015 Paris(FR)**
Inventeur: **Verhulst, Didier, 56, rue Rouelle, F-75015 Paris(FR)**

(74) Mandataire: **Mongrédien, André et al, c/o BREVATOME 25, rue de Ponthieu, F-75008 Paris(FR)**

(56) Documents cités: (suite)

**vol. 64, no. 3, mai-juin 1984, pages 35-40; Paris, FR; P. DEMAN: "Perspective d'application du saut de fréquence et des techniques AMRC aux réseaux cellulaires numériques"
IEEE SPECTRUM,
vol. 20, no. 6, juin 1983, pages 30-37, IEEE, New York, US; G.R. COOPER: "Cellular mobile technology: the great multiplier"
NACHRICHTEN ELEKTRONIK + TELEMATIK,
vol. 38, no. 7, juillet 1984, pages 264-268, Heidelberg, DE; M. BÖHM: "Mit Digitaltechnik zum Mobiltelefon für alle"**

## Description

La présente invention a pour objet un système de radiocommunications à sauts de fréquence lents et à protocole mixte d'attribution de séquences.

Le système de l'invention est d'un type dit à "accès multiple à répartition dans les codes ou en abrégé AMRC, (CDMA en anglais pour "Code Division Multiple Access"). En outre, ce système est du type à "sauts de fréquence lents" ou en abrégé SFL, (SFH en anglais pour "Slow Frequency Hopping"). Avant d'entrer dans le détail de ces systèmes AMRC/SFL il n'est pas inutile de les situer dans le contexte plus général des systèmes radio à accès multiple.

On réunit sous le nom de protocole d'accès multiple un ensemble de procédures qui sont mises en oeuvre pour que plusieurs communications puissent coexister en utilisant une même ressource. Ces protocoles ont pour fonction de réduire les interférences entre utilisateurs grâce à une répartition spatiale, temporelle ou fréquentielle ou en utilisant des techniques de codage qui permettent de différencier les communications.

La répartition dans l'espace est obtenue grâce à une division cellulaire de la zone de couverture du système. Ainsi, il est toujours possible de réduire la portée des émetteurs fixes et mobiles et de réutiliser le même spectre radio lorsque les émetteurs sont suffisamment éloignés pour que les interférences soient acceptables. Si la capacité d'un système s'exprime en nombre d'utilisateurs par km², on voit que ce paramètre peut toujours être amélioré à condition d'accepter une augmentation proportionnelle du nombre de stations radio fixes. On préfère finalement évaluer l'efficacité spectrale d'un protocole en terme de nombre d'utilisateurs par cellule et par unité de bande radio.

Les protocoles d'accès multiple doivent permettre des communications simultanées tout en maintenant des rapports signal sur interférences acceptables.

On peut distinguer plusieurs familles de protocoles suivant le mode de répartition des utilisateurs. Une première famille réalise un Accès Multiple à Répartition Fréquentielle (AMRF), ce qui signifie que l'on affecte des canaux fréquentiels distincts aux mobiles d'un même voisinage. Pour les systèmes organisés en motifs cellulaires, on retrouve les mêmes jeux de fréquences d'un motif à l'autre. Il y a donc réutilisation de la ressource fréquence dans la zone globale de couverture du système. La distance moyenne de réutilisation est égale à la distance séparant les centres de deux motifs adjacents.

Il existe une deuxième famille de protocoles d'accès multiple où des utilisateurs voisins utilisent la même bande de fréquence. Ces protocoles ne sont utilisables que dans le cas des systèmes numériques. Pour éviter les interférences, les utilisateurs communiquent sur le canal partagé à des instants différents. On parle alors d'Accès Multiple à Répartition dans le Temps (AMRT).

A côté des protocoles AMRF et AMRT, il existe une troisième technique qui réalise un protocole d'Accès Multiple à Répartition dans les Codes (AMRC). Les utilisateurs se distinguent alors par leur "code". Dans le cas particulier des sauts de fréquence lents le code est défini par la séquence des intervalles temps-fréquence qu'ils utilisent. Les échanges d'information sont possibles si l'émetteur et le récepteur changent de fréquence de façon synchrone. Pour cela le réseau est entièrement synchronisé par diffusion d'une référence de temps à partir de stations fixes vers des stations mobiles.

Avec ce dernier type d'accès multiple, on ne cherche plus à restreindre l'activité des utilisateurs dans une petite partie du domaine temps-fréquence. Au contraire, on accepte que tous les utilisateurs émettent sur l'ensemble de la ressource radio et on dit qu'il y a "étalement du spectre". On connaît depuis longtemps l'intérêt des techniques de modulation à étalement de spectre pour réaliser des transmissions en milieu très perturbé par le bruit ou les évanouissements. La diversité obtenue par l'utilisation d'une grande variété de ressources temps-fréquence peut en effet être mise à profit pour réaliser un codage correcteur efficace.

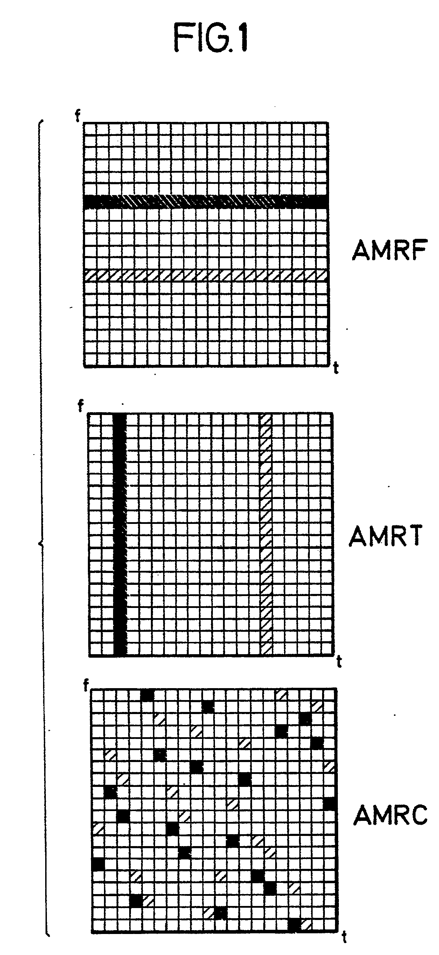

La figure 1 illustre schématiquement ces trois protocoles en montrant dans un repère temps (en abscisses)-fréquence (en ordonnées) la répartition des intervalles attribués à deux utilisateurs (intervalles noirs et rayés).

On peut trouver une description de ces techniques dans un article de ON-CHING YUE intitulé "Spead Spectrum Mobile Radio, 1977-1982" publié dans la revue "IEEE Transactions on Vehicular Technology" vol VT-32, n°1, Février 1983, pp. 98-105.

En ce qui concerne la technique du saut de fréquence, il faut distinguer les sauts de fréquence rapides, en abrégé SFR (FFH en anglais pour "Fast Frequency Hopping") et les sauts de fréquence lents, en abrégé SFL (SFH pour "Slow Frequency Hopping"). En SFR la vitesse du saut est supérieure au taux de transmission des données, ce qui signifie que pour chaque élément binaire d'information le modulateur délivre plusieurs signaux à des fréquences différentes. En SFL, au contraire, la vitesse de saut est inférieure au taux de transmission des données. On peut ainsi transmettre quelques centaines d'éléments binaires avec la même porteuse. Pour fixer les idées, on peut dire qu'en SFL le débit utile d'une voie peut être de l'ordre de la centaine de kilobits/s, avec des paliers de fréquence qui durent quelques millisecondes.

C'est donc dans cette dernière technique AMRC/SFL que se situe la présente invention.

Bien que les performances des systèmes de radiocommunications mettant en oeuvre le protocole AMRC/SFL déjà proposé donnent satisfaction à certains égards, leur efficacité spectrale (c'est-à-dire, comme indiqué plus haut, le nombre d'utilisateurs par cellule et par unité de bande radio) peut être améliorée, et c'est justement le but que vise l'invention. Pour comprendre comment ce problème est résolu il faut approfondir les techniques connues d'attribution des séquences aux différents utilisateurs.

On connaît essentiellement deux modes d'attribution de ces fréquences que l'on qualifie généralement d'aléatoire et d'orthogonal.

Dans un mode de gestion aléatoire on engendre, à partir de N canaux de fréquences disponibles, un grand nombre (très supérieur à N) de séquences aléatoires, indépendantes les unes des autres et l'on alloue à chaque abonné du réseau une telle séquence, et cela une fois pour toutes. Cette allocation s'effectue par exemple à la prise d'abonnement. Comme le nombre de séquences est très grand, il n'est pas exclu que certains utilisateurs se trouvent ensemble, sur un même palier. Mais comme les séquences ont un caractère aléatoire, les interférences ne peuvent s'établir que de façon momentanée. Néanmoins, au fur et à mesure que la charge d'un tel système augmente, il est facile d'imaginer qu'il y a de plus en plus de collisions sur les paliers. Il est donc nécessaire d'introduire une certaine redondance en codant les informations utiles de façon à se protéger contre les effacements éventuels. Cette technique de codage impose un débit de transmission accru, qui ne peut être obtenu qu'avec un espacement des fréquences plus large. Pour une bande radio totale donnée, l'espacement plus large des canaux a pour effet d'en réduire le nombre, et le taux d'effacement des paliers se trouve augmenté. Il faut alors trouver un compromis entre le taux de redondance et le taux d'effacement.

On observera que dans un tel système, il n'y a pas véritablement de scénario d'attribution coordonné de la ressource temps-fréquence en fonction de la demande instantanée, puisque l'allocation est définitive. Cela simplifie évidemment la gestion au niveau des stations mais limite les performances. Il n'est pas non plus possible de construire des motifs de réutilisation comme dans un scénario AMRF. C'est l'ensemble de la couverture du système qui est traité par allocation prédéterminée d'un grand nombre de séquences.

Un tel scénario aléatoire est décrit dans la demande de brevet français n° 2529040 déposée le 18.06.1982 pour "Système de radiocommunications à sauts de fréquence, à redondance interpaliers" et dans la demande de brevet français 2527871 déposée le 27.05.82 pour "Système de radiocommunications à sauts de fréquence".

Le scénario aléatoire est également décrit dans un article de D.VERHULST et al. intitulé "Slow Frequency Hopping Multiple Access for Digital Cellular Radiotelephone" publié dans IEEE Journal on Selected Areas in Communications, vol SAC-2, n°4, juillet 1984, pp.563-574.

L'autre mode de gestion, qui est d'ailleurs plus proche de l'invention qui va être décrite, est le mode dit orthogonal. Il consiste à engendrer un ensemble de séquences qui sont rigoureusement orthogonales entre elles en ce sens qu'il n'y a pas de collisions possibles sur un palier. Le nombre de ces séquences est égal au nombre N de fréquences disponibles. Il est possible d'affecter ces séquences orthogonales aux différentes communications comme on affecte les N fréquences d'un système AMRF ou les N intervalles de temps d'un système AMRT. On parle alors d'AMRC "orthogonal".

Au prix, il est vrai, d'une complexité accrue des appareils radio, on a obtenu un gain théorique par rapport à l'AMRF en raison de ce que l'effet des chemins multiples est différent sur chaque palier. Cela signifie que si, pour un palier de fréquence, on observe un évanouissement dû à des interférences entre chemins multiples, sur le palier suivant cet effet peut disparaître puisqu'alors la fréquence sera différente. On dit qu'il y a "diversité fréquentielle". Cette propriété facilite la protection par codage contre les évanouissements.

L'inconvénient du système orthogonal est qu'il ne peut conduire qu'à un nombre de séquences limité (égal au plus au nombre N de fréquences puisqu'il n'existe, à chaque instant, que N fréquences disponibles). La manière de choisir de telles séquences orthogonales fait appel à des notions qui sortiraient du cadre de la présente demande. Il suffit d'indiquer que ce problème peut se traiter à l'aide de la théorie des corps de Galois, qui sont des ensembles finis d'éléments. L'article de ON-CHING YUE cité plus haut évoque cette question, page 102.

Dans un système AMRC orthogonal, les séquences ne sont pas allouées par avance aux utilisateurs mais attribuées au fur et à mesure des demandes de communication. Il en résulte qu'il y a blocage quand on atteint la capacité du système, c'est-à-dire quand N utilisateurs veulent communiquer simultanément, (alors que dans le mode de gestion aléatoire évoqué plus haut, il n'y a pas blocage mais dégradation progressive de la qualité des communications avec l'accroissement de la charge). C'est la raison pour laquelle, afin d'augmenter la capacité du système, on trouve dans l'AMRC orthogonal des motifs de réutilisation des ressources. L'ensemble de la couverture du système est formé de la juxtaposition de tels motifs. Quand on passe d'un motif au suivant, on retrouve les mêmes jeux de séquences.

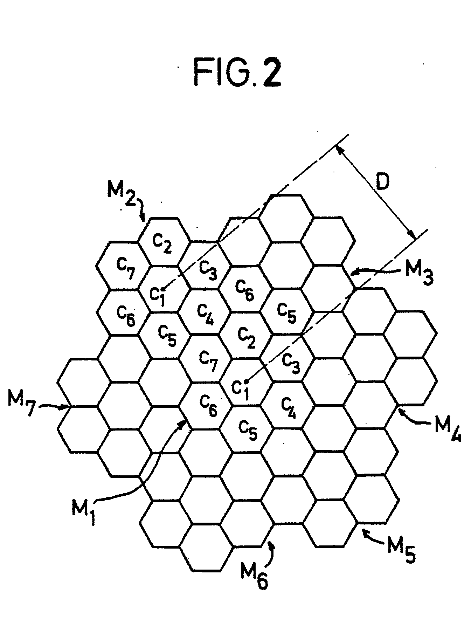

La figure 2 permet de mieux comprendre le principe de division de la couverture radio en motifs cellulaires. Sur cette figure sont représentés des motifs à 7 cellules hexagonales (selon une symbolisation habituelle qui ne doit pas être considérée comme une représentation fidèle de la forme réelle des cellules). Chaque cellule est repérée par une référence $C_1$, $C_2$, $C_3$ .. $C_6$, $C_7$, qui représente la position de la cellule dans un motif de taille 7. On parle aussi parfois de "couleur" d'une cellule, pour désigner la position de la cellule dans un motif. Par exemple toutes les cellules $C_5$ ont une même "couleur" en ce sens qu'elles occupent toutes une même position dans les motifs (en l'occurrence la position la plus basse). Les divers motifs sont par ailleurs désignés par $M_1$, $M_2$,...

Dans un scénario orthogonal, on affecte un jeu de séquences à chaque cellule, (soit au total 7 jeux de séquences dans l'exemple illustré) ces séquences étant orthogonales entre elles dans une même cellule et dans les cellules de couleurs différentes. Les mêmes jeux de séquences sont réutilisés dans les autres motifs avec la même répartition (les cellules de même couleur travaillent avec les mêmes jeux de séquences).

On voit aisément que cette répartition cellulaire permet d'éviter tout conflit entre cellules proches :

si l'on considère, par exemple, la cellule $C_2$ du motif $M_1$, cette cellule travaille avec des séquences qui sont orthogonales entre elles dans $C_2$, mais également orthogonales avec toute séquence des cellules voisines $C_3$ et $C_7$ du même motif $M_1$ mais également orthogonales avec toute séquence de la cellule $C_4$ du motif $M_2$ (puisque les séquences de $C_4$-$M_2$ sont identiques aux séquences de $C_4$-$M_1$ lesquelles sont orthogonales aux séquences de $C_2$-$M_1$) et avec toute séquence des cellules $C_5$ et $C_6$ de $M_3$ (puisque les séquences utilisées dans ces cellules sont identiques aux séquences utilisées respectivement dans $C_5$ et $C_6$ de $M_1$). Il n'y a donc pas de collisions possibles entre une cellule et ses voisines.

Malgré l'intérêt de ce système, un inconvénient apparaît losqu'on prend en compte, non pas seulement l'interaction d'une cellule avec des cellules adjacentes mais l'interaction d'une cellule avec des cellules éloignées non adjacentes. Dans le schéma de la figure 2, on voit par exemple que les deux cellules centrales $C_1$, distantes de D (qui représente le pas du réseau) travaillent sur des jeux de séquences identiques. Bien qu'éloignées, ces deux cellules peuvent se gêner mutuellement. Chaque cellule d'une couleur particulière se trouvant entourée de 6 cellules de même couleur situées à une distance D, (par exemple les 6 cellules $C_1$ des motifs $M_2$ à $M_7$), et ces 6 cellules travaillant avec le même jeu de fréquences, il résulte, en général, un brouillage continu par 6 émissions distantes.

C'est ce problème que se propose de résoudre l'invention en modifiant le mode d'attribution des séquences, tout en sauvegardant les avantages du scénario orthogonal au sein d'une cellule et dans le voisinage de celle-ci.

On peut dire que le mode de gestion préconisé par l'invention est "mixte" en ce sens qu'il retient pour une part le scénario orthogonal dans une cellule et dans son voisinage et qu'il s'apparente au scénario aléatoire, par l'utilisation d'un grand nombre de séquences pseudo-orthogonales.

L'idée d'un scénario mixte a déjà été suggérée dans la littérature. C'est le cas, par exemple, dans l'article de M. MOULY et D. VERHULST publié dans l'Onde Electrique, mai-juin 1984, vol. 64, n°3, pp 22-28. Selon ce scénario, on affecte les codes aux mobiles qui veulent communiquer comme dans le mode orthogonal, mais en choisissant parmi un grand nombre de séquences qui ont les propriétés suivantes :

- il n'y a pas de collision entre deux séquences utilisées dans une même cellule,
- il n'y a pas de collision entre les cellules de numérotation différente dans le motif,
- les codes utilisés dans des cellules différentes de même numéro sont indépendants les uns des autres.

En pratique, la notion d'indépendance des codes est floue et ne permet pas de définir avec précision quelles séquences on va réellement utiliser et quel sera le taux de collision dans des cellules différentes de même numéro. Dans un scénario orthogonal, le taux de collision est nul dans une même cellule et dans des cellules de couleurs différentes. Mais le taux peut atteindre 1 pour des séquences utilisées dans des cellules de même couleur appartenant à des motifs différents (puisque, dans ces cellules, la même séquence peut être réutilisée). Dans un scénario mixte, le taux de collision maximum est compris entre 0 et 1 dans des cellules de même couleur appartenant à des motifs différents.

L'invention précise cette question en fixant le taux de collision entre une première séquence affectée à une cellule et une seconde séquence affectée à une autre cellule à une valeur inférieure à

$$\frac{1}{M},$$

si M est le nombre de fréquences effectivement utilisées par la première et la seconde séquences. Autrement dit, M est le nombre de fréquences qu'il faut utiliser pour constituer les deux séquences. Mais dans l'invention, les deux séquences peuvent utiliser des jeux de fréquences différents, certaines fréquences se retrouvant dans les deux séquences, mais d'autres fréquences n'étant utilisées que dans l'une ou dans l'autre des séquences.

De toute manière, naturellement, M est au plus égal à N, nombre total de fréquences disponibles dans le système.

De façon précise, l'invention a donc pour objet un système de communication AMRC/SFL, ce système étant tel que pour une séquence attribuée à une station mobile dans une cellule, les séquences attribuées, dans cette cellule ou dans un ensemble de cellules voisines comprenant cette cellule, à d'autres stations mobiles ont, avec la séquence en question, un taux de collision nul, ce système étant caractérisé par le fait qu'au momoune séquence attribuée dans les autres cellules c'est-à-dire dans les cellules qui ne sont ni la cellule en question, ni les cellules voisines de la cellule en question a, avec la séquence en question, un taux de collision non nul mais inférieur ou égal à

$$\frac{1}{M},$$

où M est le nombre de fréquences effectivement utilisées dans les deux séquences.

Dans un mode de réalisation avantageux les cellules sont organisées en groupes dits motifs de réutilisation, chaque cellule pouvant être repérée par la position qu'elle occupe dans un motif, le nombre maximum de fréquences attribué à une cellule étant égal à P. Dans ce cas, les séquences utilisées dans des cellules de positions différentes ont un taux de collision nul et les séquences utilisées dans des cellules de même position dans des motifs différents ont un taux de collision inférieur à

$$\frac{1}{P}.$$

Parmi les modes d'affectation possibles, on peut citer en particulier:

a) la possibilité d'engendrer un nombre de séquences plus grand que le nombre de canaux fréquentiels. On obtient ainsi des codes plus ou moins "coordonnés" suivant le nombre de séquences nécessaires. Lorsque le nombre de séquences par cellule devient très grand (par exemple pour satisfaire un nombre élevé d'utilisateurs avec une faible activité), on tend vers un scénario comparable, du point de vue de la statistique des brouillages, au scénario aléatoire (si ce n'est qu'il peut faire appel à des motifs de réutilisation).

b) la possibilité d'utiliser des motifs de réutilisation qui acceptent des interférences entre cellules de couleurs différentes. L'ensemble des brouilleurs se répartit alors sur un plus grand nombre de cellules pour obtenir un meilleur effet statistique.

Le protocole d'attribution de fréquence retenu par l'invention conduit à une propriété nouvelle qui est liée à ce qu'on peut appeler la "diversité de brouilleurs" qui s'ajoute au phénomène de diversité de fréquence déjà évoqué. Ce point mérite qu'on s'y arrête car plusieurs avantages vont en découler.

Pour concevoir un système AMRF ou AMRC orthogonal selon l'art antérieur, qui ait une bonne qualité de service, il faut construire des motifs assez grands en pensant aux cas les plus défavorables où un mobile est loin de sa base et où les autres utilisateurs des mêmes ressources radio sont dans une position particulièrement propice au brouillage. En d'autres termes, il ne sert à rien d'avoir un niveau moyen d'interférence assez faible s'il y a une probabilité non négligeable que les conditions de propagation respectives de différents utilisateurs favorisent le brouillage. Avec le système AMRC/SFL de l'invention on est dans une situation très différente car il y a un grand nombre de brouilleurs potentiels et les interférences viennent d'un nouveau groupe d'utilisateurs à chaque palier. On a affaire alors à un niveau moyen de brouillage.

Une première conséquence de cette diversité de brouilleurs est que la redondance qui peut être introduite dans les données d'information va s'avérer particulièrement efficace dans la lutte contre le brouillage, à condition de répartir les blocs de données sur plusieurs paliers. En effet, si un brouillage intervient sur un palier du fait d'une collision sur ce palier entre plusieurs utilisateurs appartenant à des cellules voisines, ce brouillage sera différent sur le palier suivant puisque les séquences des divers brouilleurs sont indépendantes de la séquence de l'utilisateur brouillé. L'entrelacement sur plusieurs paliers permettra donc, grâce aux données de redondance, de retrouver l'information perdue sur un palier. Ceci n'était pas le cas avec le scénario orthogonal puisqu'on pouvait retrouver à chaque palier les mêmes brouilleurs.

La présente invention a donc également pour objet un système tel que celui qui a été défini plus haut, dans lequel à partir des signaux numériques d'information, on forme des signaux codés ayant un certain taux de redondance, ces signaux codés étant organisés en blocs de données, les données d'un bloc étant réparties sur plusieurs paliers de fréquence.

Dans le premier brevet français cité plus haut, on trouve déjà l'idée d'une redondance, mais celle-ci est introduite dans un tout autre contexte qui est celui d'une allocation de séquences aléatoires. Par ailleurs, cette redondance consiste en une répétition des données tandis que, dans l'invention, on propose un autre code redondant et un codage par blocs répartis sur plusieurs paliers.

La redondance introduite dans l'invention peut faire appel à des codes détecteurs et correcteurs d'erreur qui sont bien connus de l'homme de l'art. Il semble que les codes de Reed-Solomon soient particulièrement avantageux. Les travaux des Demandeurs ont montré par ailleurs que la redondance optimale se situe en général entre 2 et 3.

La diversité de brouilleurs associée au codage, permet un taux d'utilisation élevé. On peut alors utiliser des motifs de réutilisation petits. En particulier, comme on le verra par la suite, on peut utiliser des motifs composés seulement de quelques cellules, 4 ou moins de 4 par exemple, alors que dans les systèmes AMRC traditionnels, les motifs ont des tailles au moins égales à 7 et en général supérieures à 12.

L'ensemble des propriétés qui précèdent permet d'adapter la configuration des motifs cellulaires et les règles d'attribution des séquences de fréquences en fonction des conditions d'utilisation du système. Cette flexibilité n'existait pas dans l'art antérieur des scénarii orthogonaux qui sont beaucoup plus contraignants.

Selon encore un autre aspect de l'invention, on peut superposer au schéma qui vient d'être décrit, et qui concerne les communications téléphoniques, un autre schéma, moins exigeant en ce qui concerne les collisions entre séquences et qui sert à la transmission de données diverses. On aboutit alors à un système multiservice qui permet de transmettre non seulement la parole mais également les signaux de signalisation ou des données.

Les séquences supplémentaires ainsi introduites pourront avoir un taux de collision k' plus grand que le taux k retenu pour la téléphonie (ce dernier étant évidemment faible et égal à 1 en général). De telles séquences supplémentaires peuvent être définies en grand nombre comme on le comprendra mieux par la suite. Elles peuvent éventuellement être allouées de manière prédéterminée aux divers abonnés du système, comme les séquences des systèmes AMRC aléatoires évoqués plus haut. Mais, naturellement, les stations fixes peuvent aussi les attribuer à la demande des utilisateurs, comme des séquences de téléphonie.

Selon encore un autre aspect de l'invention le système peut utiliser plusieurs jeux de séquences correspondant à des flux d'informations de plusieurs natures, les séquences étant utilisées de manière incomplète et multiplexées temporellement.

Un utilisateur peut maintenir plusieurs liaisons en parallèle en utilisant un multiplexage simple entre différents codes d'accès. Pendant une communication téléphonique, un schéma réaliste consiste à utiliser systématiquement 6 paliers sur 7 pour la parole et à réserver 1 palier sur 7 pour d'autres transmissions. La proportion du temps alloué à ces liaisons complémentaires permet d'utiliser en fait plusieurs codes d'accès pour différents types d'échanges (signalisation associée, synchronisation horaire, mesure des niveaux reçus de plusieurs stations voisines pour préparer un changement de cellule, diffusion de messages, etc...). Dans les phases de veille où le mobile n'a pas de communications vocales, tous les intervalles de temps sont utilisés pour différentes liaisons de données multiplexées (comprenant en particulier un ou plusieurs canaux d'appel).

Le tramage implicite des flux d'information correspondant aux paliers conduit à des schémas de multiplexage simples entre plusieurs communications de nature différente. Il en résulte une grande facilité pour la signalisation et le contrôle du réseau. Le service offert aux abonnés mobiles est lui même enrichi par la possibilité d'établir plusieurs liaisons simultanées dans un mode compatible avec le futur réseau numérique à intégration de services.

Il existe une autre propriété particulièrement intéressante qui tient en ceci. Il est possible de faire travailler le système aussi selon le protocole d'accès multiple à répartition dans le temps (AMRT), permettant ainsi à plusieurs stations mobiles en communication avec la même station fixe d'utiliser la même séquence mais avec des paliers de fréquence disjoints.

Dans un mode particulier de réalisation de cette variante, chaque station fixe comprend plusieurs antennes sectorielles, la station émettant dans un seul secteur à la fois et recevant dans un seul secteur à la fois.

De préférence, chaque station mobile ne travaille pas en même temps en émission et en réception.

De préférence encore, chaque station mobile travaille selon un cycle comprenant un palier d'émission, un palier de réception et un palier de repos, ce dernier étant utilisé pour changer de fréquence, ce qui permet de bénéficier d'un temps plus grand.

Enfin, selon encore un autre mode de réalisation, qui rassemble les dispositions précédentes, le motif de réutilisation est à 3 cellules, qui se confondent avec 3 secteurs.

Si cette répartition dans le temps entre $\underline{n}$ secteurs est mise à profit pour réaliser des motifs de réutilisation d'ordre $\underline{n}$, toutes les stations de base utilisent le même ensemble de canaux fréquentiels. Cela permet l'introduction progressive des stations sans révision de l'ensemble du réseau. Cela permet aussi d'envisager une reconfiguration dynamique (et automatique) en cas de défaillance d'une station fixe par simple contrôle de la puissance des émissions.

Les avantages du scénario mixte de l'invention ne concernent pas seulement le codage redondant interpalier, la réduction de la taille des motifs, la souplesse de gestion du système, la possibilité de systèmes multiservices, la répartition dans le temps, tous avantages qui viennent d'être soulignés, mais permettent encore et enfin une amélioration de l'efficacité spectrale qui tient en ceci. Il est possible de réaliser le système de l'invention de telle manière qu'il n'y ait pas transmission effective des paliers dans les périodes de silence de la communication. Dès lors que les phénomènes d'interférence interviennent par leur valeur moyenne, la charge réelle induite par un utilisateur est simplement égale au taux d'activité réel de sa communication. Il a été mesuré que la proportion du temps où il y a effectivement transmission d'informations sur un canal vocal est voisin de 40%. Il en résulte que les systèmes radiotéléphoniques AMRC/SFL selon l'invention acceptent un nombre d'utilisateurs 2,5 fois plus grand en téléphonie, si l'on est capable de détecter toutes les périodes de silence. Ce gain d'activité, déjà important pour les communications vocales, devient très important pour les transmissions de données qui sont par nature très impulsives.

De toutes façons on comprendra mieux l'invention après la description qui va suivre d'un exemple de réalisation qui est donné à titre explicatif et nullement limitatif. Cette description se réfère à des dessins annexés sur lesquels :

- la figure 1, déjà décrite, illustre trois variétés de protocoles d'accès multiple,
- la figure 2, déjà décrite, illustre un réseau à motifs cellulaires selon l'art antérieur,
- la figure 3 représente un exemple de schéma de codage,
- la figure 4 représente un motif à 3 cellules selon un mode particulier de réalisation de l'invention,
- la figure 5 montre un schéma synoptique d'un émetteur-récepteur selon un mode particulier de réalisation de l'invention.

Dans la description qui suit, on énumère les caractéristiques et avantages les plus importants, concernant le scénario d'affectation des séquences selon l'invention et plus particulièrement ceux d'un système à trois secteurs.

De manière générale, tout d'abord, le système de l'invention fait appel à une synchronisation totale du réseau qui est obtenue par diffusion d'une référence de temps par les stations fixes. La technique de sauts de fréquence lents est utilisée avec une durée de palier qui est de l'ordre de la milliseconde. La parole est transmise sous forme numérique avec un débit utile voisin de 16 kbit/s. En tenant compte de la redondance du codage de canal (taux ici égal à 2), de la capacité complémentaire nécessaire pour la signalisation (et éventuellement les transmissions de données en cours de communication), d'un facteur multiplicatif égal à trois pour la répartition dans le temps entre les 3 secteurs et des temps de garde entre paliers, le débit brut du modulateur est voisin de 150 kbit/s ; l'espacement entre canaux est alors de 150 kHz.

Comme indiqué plus haut, un avantage déterminant de la technique AMRC/SFL, est la diversité de fréquence qui permet de lutter contre les évanouissements selectifs et les interférences. Avec des conditions de propagation à chemins multiples, la qualité de communication reste satisfaisante quelle que soit la vitesse de déplacement des mobiles.

Pour se protéger contre les effacements de paliers (dûs aux interférences et aux évanouissements) on tire profit de la double diversité obtenue selon l'invention en utilisant un codage par bloc de type Reed-Solomon. Un code de type (6,3) avec taux de redondance égal à 2 permet ainsi d'obtenir un taux de perte de blocs de parole entre 1% et 5% lorsque le taux de perte des paliers est compris entre 17% et 27%. On sait qu'un code (6,3) signifie qu'à partir de 3 octets d'informations on forme 6 octets redondants.

Le codage par bloc avec distribution des symboles sur plusieurs paliers est un complément indispensable de la diversité de fréquence. Il apporte une protection contre les interférences et il permet finalement d'avoir un taux d'utilisation des ressources plus élevé (et donc un plus grand nombre de mobiles par cellule).

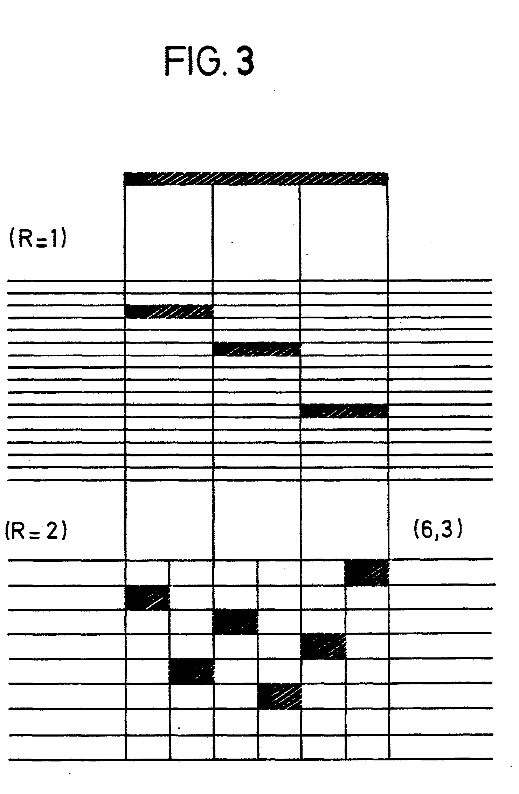

La figure 3 montre le schéma de principe de ce codage, dans le cas particulier suivant :

- la durée des paliers est de 3 ms,
- le débit utile pour la parole est de 16 kbit/s,
- la longueur d'un bloc élémentaire d'information est de 18 ms et correspond au temps de transmission de 6 paliers,
- un bloc contient 36 octets qui forment 12 groupes de 3 octets avant codage,
- on utilise des codes (6,3) qui transforment 3 octets utiles en 6 octets redondants,
- pour chacun des 12 mots de code, on répartit les 6 cotets après codage sur les 6 paliers.

Sur la partie supérieure est représenté un bloc de données sans redondance (taux R=1). Ce bloc est réparti sur 3 paliers de fréquence ayant une certaine largeur (milieu de la figure). Selon l'invention, le bloc de données est codé avec une redondance 2 (R=2) et le bloc codé est réparti sur 6 paliers dont la largeur en fréquence est double (partie inférieure). Le nombre de canaux disponibles est donc divisé par 2.

Dans un tel système, il y a effacement de 18 ms de parole si et seulement si plus de trois paliers sont effacés.

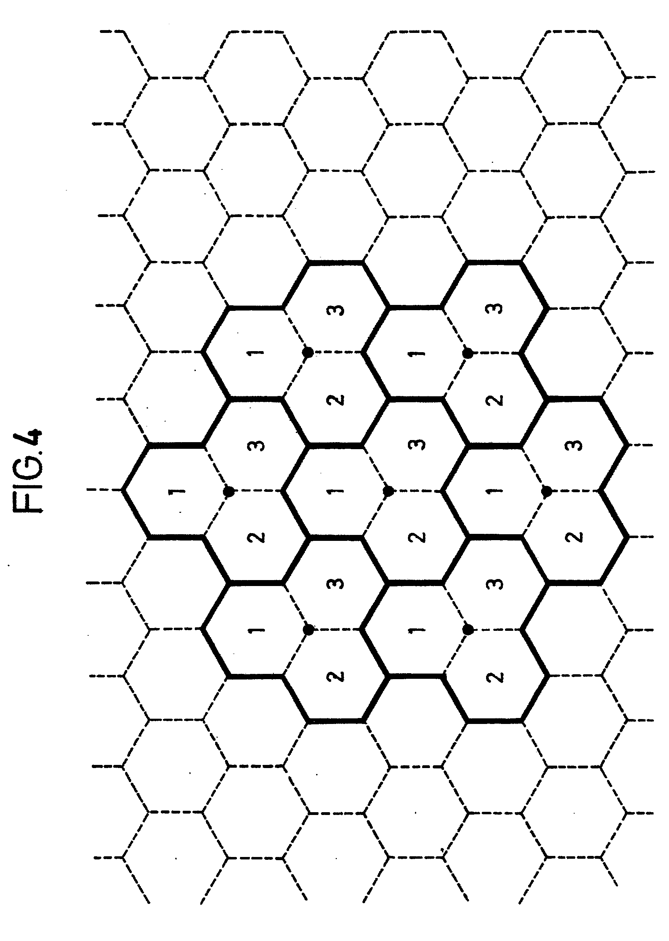

Un système à 3 cellules par motif, ou 3 secteurs, est représenté schématiquement sur la figure 4. Les cellules portent les références $C_1$, $C_2$ et $C_3$. Un tel système fait appel à un ensemble de stations fixes dont les caractéristiques matérielles sont rigoureusement identiques (elles utilisent toutes les mêmes canaux fréquentiels). Elles ne diffèrent que par les jeux de séquences utilisés et ceux-ci peuvent être changés par une simple révision des paramètres du logiciel. Sans apporter la moindre modification aux terminaux mobiles, il est possible de faire évoluer les règles d'attribution des séquences pour s'adapter à des conditions de propagation et de trafic variables. Par exemple, on peut commencer avec peu de sites radio et utiliser un motif à 1, sans secteur, pour évoluer ensuite vers un système plus dense avec des motifs à trois secteurs. Si les conditions de propagation limitent a priori les interférences entre mobiles distants, on peut augmenter le nombre de communications téléphoniques au niveau d'une cellule en utilisant un nombre de séquences orthogonales de plus en plus grand et en utilisant éventuellement des séquences non parfaitement orthogonales mais à faible taux de collision. Lorsqu'une station tombe en panne, l'uniformité des stations permet aussi d'envisager une reconfiguration automatique du réseau par une simple adaptation des puissances d'émission qui augmente la zone de couverture des cellules voisines.

L'homogénéité du réseau apporte ainsi un certain nombre d'avantages pour la gestion, liés notamment aux possibilités de reconfiguration des motifs cellulaires et à la souplesse d'évolution.

Les séquences utilisées pour les communications vocales sont différentes d'un motif à l'autre. On obtient ainsi la propriété de diversité de brouilleurs qui rend possible l'utilisation de motifs de taille aussi petite que 3 en maintenant une bonne qualité de communication. Si on utilise, en complément, des mécanismes de détection des périodes de silence (pour la téléphonie et pour les transmissions de données), un tel système permet en fait de n'utiliser les ressources radio qu'en proportion de l'activité réelle. Avec un taux d'activité inférieur à 0,5 en téléphonie, on obtient déjà un avantage significatif du point de vue capacité. Pour les communications de nature impulsive, cette propriété devient très profitable et elle permet d'utiliser des séquences pseudo aléatoires.

Après cette description d'un mode particulier de réalisation de l'invention, il reste à donner quelques indications sur la manière d'engendrer les séquences satisfaisant aux critères énoncés plus haut (orthogonalité dans une même cellule et nombre de collisions limité pour des cellules de couleurs différentes). Bien qu'il existe un grand nombre de techniques pour engendrer de telles séquences (l'article de ON-CHING YUE cité plus haut contient à cet égard des informations et des références à d'autres ouvrages) on peut utiliser une des méthodes décrites dans un article de G. SOLOMON intitulé "Optimal Frequency Hopping Sequences For Multiple Access" publié dans "Symposium on Spread Spectrum Communications, San Diego, 1973 p.33-35.

De façon générale, dans ce genre de problème, si une cellule dispose de N fréquences, on définit un corps de Galois d'ordre N et l'on établit alors une bijection entre l'ensemble des fréquences possibles et le corps. Dans un tel corps, les lois d'addition et de multiplication sont définies modulo N. La séquence des fréquences utilisées est alors définie par la suite : $P(x)$ avec $x=\alpha^i$ où
i est le numéro de l'intervalle de temps,
P est un polynôme de degré k sur le corps qui dépend du mobile,
$\alpha$ est un élément générateur du corps de Galois.

Il existe $N^{k+1}$ polynômes de degré k qui définissent autant de séquences de période (N-1), entre lesquelles il y a au maximum k collisions tous les N intervalles, entre deux séquences quelconques.

Il est possible d'améliorer ce schéma, par exemple en affectant à chaque mobile non plus un polynôme mais une suite de polynômes de même degré utilisés séquentiellement (on obtient en particulier une période plus grande et une meilleure diversité de brouilleurs).

A titre d'exemple, soit un corps de Galois d'ordre 11. Les polynômes $P(x)$ de degré 1 (k=1) ont la forme $P(x)=Ax+B$ où A et B appartiennent au corps. Il exis-

te $11^2 = 121$ polynômes de ce genre, obtenus en donnant à A et B toutes les 11 valeurs du corps. Par exemple, en prenant A=1 et B=0 le polynôme se réduit à x. La séquence correspondante est la suite des $\alpha^i$ avec i=0,1...10. Avec $\alpha=2$ comme élément générateur, la séquence des $\alpha^i$ est donnée par la suite des puissances de 2, modulo 11, soit :

1,2,4,8,5,10,9,7,3,6.

Pour d'autres valeurs de A et de B le polynôme change et avec lui la séquence obtenue. Par exemple avec A=2 et B=1, le polynôme générateur est P(x) = 2x+1 et la séquence devient :

3,7,9,6,0,10,8,4,7,2.

On observera que ces deux séquences sont en collision sur la cinquième valeur ($2^5=10$ modulo 11 et $2.2^5+1 = 65 = 10$ modulo 11). Mais ces deux séquences n'ont qu'une collision (puisque les polynômes sont du premier degré).

Pour obtenir les séquences souhaitées avec collisions au plus égale à 1 dans des cellules de couleurs différentes et éviter les collisions dans une même cellule, on utilisera donc des polynômes de la forme Ax+B avec un terme B qui sera le même pour toutes les séquences d'une même cellule avec des termes A différents et un terme B qui prendra différentes valeurs dans les cellules voisines.

Il est possible d'obtenir des cycles périodiques plus longs en utilisant des suites de termes B avec changement de façon synchrone tous les N-1 intervalles dans toutes les cellules.

Les séquences de degré 1 ont des propriétés supplémentaires intéressantes :

- chaque mobile utilise presque toutes les fréquences à chacun des cycles de N-1 intervalles (bonne diversité de fréquence) ;
- pendant chacun de ces cycles, il est en collision avec N-1 utilisateurs différents dans chaque cellule extérieure (bonne diversité de brouilleurs).

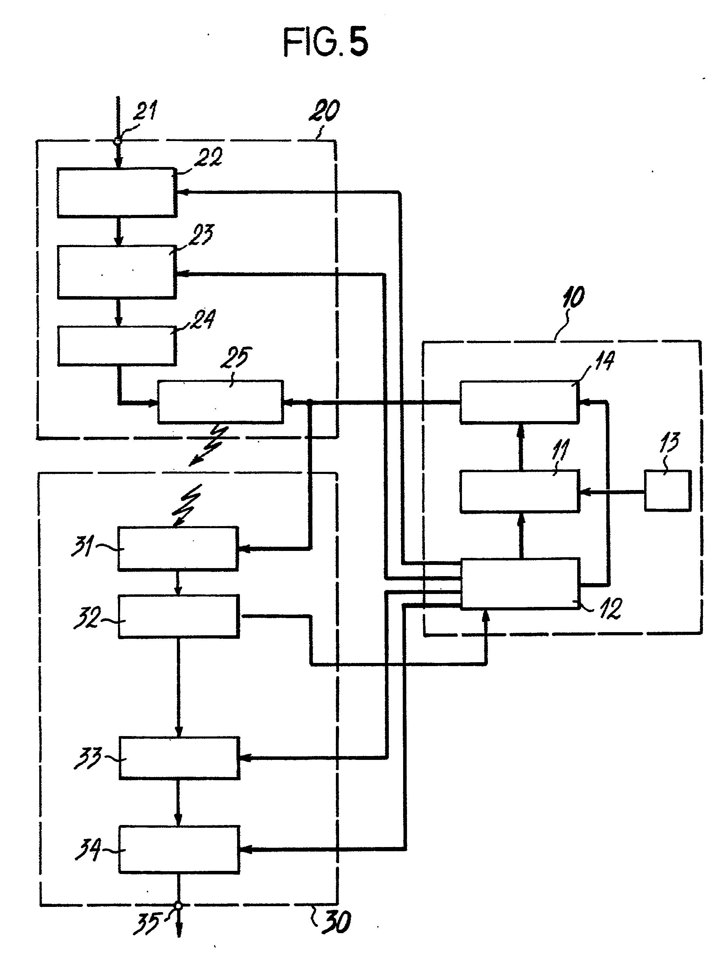

En ce qui concerne les équipements à utiliser pour mettre en oeuvre l'invention, ils sont de type quelconque, puisque l'originalité de l'invention tient d'abord dans un choix des séquences à attribuer aux utilisateurs. A titre explicatif, la figure 5 montre un exemple de structure possible, qui est par ailleurs d'un type connu. Sur cette figure le circuit représenté comprend une partie émission 20, une partie réception 30 et un ensemble de circuits communs d'émission-réception 10.

Les circuits communs d'émission-réception 10 de la station comportent un générateur de séquences 11 commandé par une horloge 12. La loi de sauts de fréquence engendrée par le générateur 11 est déterminée en fonction des ressources disponibles. Cette gestion est assurée par un microprocesseur 13. La sortie de ce générateur 11 est reliée à une entrée de commande d'un synthétiseur 14 lequel est relié également à l'horloge 12. La sortie du synthétiseur délivre, pour chaque palier de la loi temps-fréquence en cours, une fréquence porteuse différente caractéristique du mobile et de l'heure du réseau.

La partie émission comporte une entrée 21 qui reçoit le signal à transmettre, un circuit d'entrée 22 dont la sortie fournit le signal à transmettre sous forme numérique et un circuit de codage 23, tous deux commandés par l'horloge 12 de l'ensemble 10. Le circuit de codage 23 est destiné à former des blocs de données numériques avec redondance, et à répartir ces blocs sur des paliers successifs. La sortie du circuit de codage est reliée à un modulateur 24 lequel est relié à l'entrée d'un émetteur 25 qui reçoit par ailleurs, du synthétiseur 14, les fréquences porteuses pour les paliers d'émission successifs.

La partie réception 30 comporte un récepteur 31, qui reçoit les signaux modulés. Ce récepteur est commandé par le synthétiseur de fréquences 14. La sortie du récepteur 31 est reliée à l'entrée d'un démodulateur 32 qui fournit la suite des données numériques démodulées. Le démodulateur fournit également un signal d'horloge qui est restitué à partir des données reçues. Ce démodulateur est donc relié à l'horloge 12. Les données sont transmises à un décodeur 33 ayant une entrée de commande reliée à l'horloge 12. Un circuit de sortie 34 restitue les données sur une sortie 35.

**Revendications**

1. Système de radiocommunications basé sur un protocole d'accès multiple à répartition dans les codes et à sauts de fréquence lents (AMRC/SFL), ce système permettant une communication bilatérale entre des stations fixes et des stations mobiles, chaque station fixe couvrant une ou plusieurs cellules, l'information transmise par un tel système étant codée sous forme numérique par modulation d'une porteuse dont la fréquence occupe successivement divers paliers de fréquence selon une séquence ayant une loi de sauts de fréquence déterminée, ces fréquences étant choisies parmi un ensemble de fréquences commun à tout le système, und séquence servant à identifier les signaux émis et reçus par une station mobile, ce système étant tel que pour une séquence attribuée à une station mobile dans une cellule, les séquences attribuées, dans cette cellule ou dans un ensemble de cellules voisines comprenant cette cellule, à d'autres stations mobiles ont, avec la séquence en question, un taux de collision nul, ce système étant caractérisé par le fait qu'au moins une séquence attribuée dans les autres cellules, d'est-à-dire dans les cellules qui ne sont ni la cellule en question, ni les cellules voisines de la cellule en question, a, avec la séquence en question, un taux de collision non nul mais inférieur ou égal à

$$\frac{1}{M}$$

où M est le nombre de fréquences effectivement utilisées dans les deux séquences.

2. Système selon la revendication 1, caractérisé par le fait que les cellules sont organisées en groupes dits motifs de réutilisation, chaque cellule pouvant être repérée par la position qu'elle occupe dans un motif, le nombre maximum de fréquences attribué à une cellule étant égal à P, et par le fait que les séquences utilisées dans des cellules de positions différentes ont un taux de collision nul et les séquences utilisées dans les cellules de même position ont un taux de collision non nul main inférieur ou égal à

$$\frac{1}{P}.$$

3. Système de radiocommunications selon la revendication 1, caractérisé par le fait qu'à partir des signaux numériques d'information on forme des signaux codés ayant un certain taux de redondance, ces signaux codés étant organisés en blocs de données, les données d'un bloc étant réparties sur plusieurs paliers de fréquence.

4. Système selon la revendication 3, caractérisé par le fait que le taux de redondance est compris entre 2 et 3.

5. Système selon la revendication 1, caractérisé par le fait qu'il comprend un moyen pour détecter les périodes d'inactivité des stations mobiles et/ou des stations fixes et un moyen pour supprimer l'émission des paliers de fréquence correspondant à ces périodes d'inactivité.

6. Système selon la revendication 2, caractérisé par le fait que le nombre de cellules constituant un motif est inférieur ou égal à 4.

7. Système selon la revendication 2, caractérisé par le fait que la configuration des motifs cellulaires et les règles d'attribution des séquences de fréquences dans les diverses cellules sont adaptables aux conditions d'utilisation du système.

8. Système selon la revendication 1, caractérisé par le fait qu'il utilise des séquences supplémentaires présentant chacune, avec n'importe quelle autre séquence du système, un taux de collision inférieur à

$$\frac{1}{M'},$$

où M' est inférieur à M.

9. Système selon la revendication 1, caractérisé par le fait qu'il utilise plusieurs jeux de séquences correspondant à des flux d'informations de plusieurs natures, les séquences étant utilisées de manière incomplète et multiplexées temporellement.

10. Système selon la revendication 8, caractérisé par le fait que les séquences supplémentaires destinées à la signalisation et/ou aux données sont attribuées par les stations fixes aux stations mobiles qui les demandent.

11. Système selon la revendication 8, caractérisé par le fait que les séquences supplémentaires destinées à la signalisation et/ou aux données sont préattribuées aux stations mobiles.

12. Système selon la revendication 1, caractérisé par le fait qu'il travaille aussi selon le protocole d'accès multiple à répartition dans le temps (AMRT) permettant à plusieurs stations mobiles en communication avec la même station fixe d'utiliser la même séquence mais avec des paliers de fréquence disjoints.

13. Système selon la revendication 12, caractérisé par le fait que chaque station fixe comprend plusieurs antennes sectorielles, la station émettant dans un seul secteur à la fois et recevant dans un seul secteur à la fois.

14. Système selon la revendication 12, caractérisé par le fait que chaque station mobile ne travaille pas en même temps en émission et en réception.

15. Système selon la revendication 14, caractérisé par le fait que chaque station mobile travaille selon un cycle comprenant un palier d'émission, un palier de réception et un palier de repos, ce dernier étant utilisé pour changer de fréquence.

16. Système selon l'une quelconque des revendications 13 à 15, caractérisé par le fait que le motif de réutilisation est à 3 cellules, qui se confondent avec les 3 secteurs.

**Claims**

1. Radiocommunications system based on a code division multiple access system with slow frequency hopping (CDMA/SFH), this system enabling bilateral communication between fixed stations and mobile stations, each fixed station covering one or more cells, the information transmitted by such a system being digitally encoded by modulating a carrier whose frequency successively occupies various freuqency levels according to a sequence having a specified frequency hopping law, these frequencies being selected from a group of frequencies common to the entire system, one sequence being used to identify the signal transmitted and received by a mobile station, this system being such that for a sequence allocated to a mobile station in a cell, the sequences allocated, in this cell or in a group of adjacent cells including this cell, to other mobile stations have, with the sequence in question, a zero collision rate, this system being characterized in that at least one sequence allocated in the other cells, i.e. in the cells which are neither the cell in question, not the cells adjacent to the cell in question, has, with the sequence in question, a collision rate which is not zero but which is less than or equal to 1/M where M is the number of frequencies actually used in the two sequences.

2. System according to Claim 1, characterized in that the cells are organized in groups called patterns of reutilization, each cell being able to be referenced by the position which it occcupies in a pattern, the maximum number of frequencies allocated to a cell being equal to P, and in that the sequences utilized in the cells of different positions have a zero collision rate and the sequences utilized in the cells of the same position have a collision rate which is not zero but which is less than or equl to 1/P.

3. Radiocommunications system according to Claim 1, characterized in that from digital data signals, encoded signals are formed having a certain redundancy rate, these encoded signals being organized as data blocks, the data of one block being distributed over several frequency levels.

4. System according to Claim 3, characterized in that the redundancy rate is between 2 and 3.

5. System according to Claim 1, characterized in that it comprises a means of detecting the periods of inactivity of the mobile stations and/or of the fixed stations and a means of suppressing the transmission of freuquency levels corresponding to these periods of inactivity.

6. System according to Claim 2, characterized in that the number of cells forming a pattern is less than or equal to 4.

7. System according to Claim 2, characterized in that the configuration of the cellular patterns and the rules of allocation of sequences of frequencies in the various cells are adaptable to the operating conditions of the system.

8. System according to Claim 1, characterized in that it utilizes additional sequences each having, with any other sequence of the system, a collision rate of less than 1/M', where M' is less than M.

9. System according to Claim 1, characterized in that it utilizes several sets of sequences being utilized in an incomplete way and time multiplexed.

10. System according to Claim 8, characterized in that the additional sequences intended for signalling and/or for date are allocated by the fixed stations to the mobile stations which request them.

11. System according to Claim 8, characterized in that the additional sequences intended for signalling and/or for data are pre-allocated to the mobile stations.

12. System according to Claim 1, characterized in that it also works according to the time division multiple access protocol (TDMA) enabling several mobile stations in communication with the same fixed station to use the same sequence but with separate frequency levels.

13. System according to Claim 12, characterized in that each fixed station includes several sectorial antennas, the station transmitting in a single sector at any one time and receiving in a single sector at any one time.

14. System according to Claim 12, characterized in that each mobile station does not work in the transmission mode and in the reception mode at the same time.

15. System according to Claim 14, characterized in that each mobile station works according to a cycle including a transmission stage, a reception stage and a rest stage, the latter being used for changing frequency.

16. System according to any of Claims 13 to 15, characterized in that pattern of re-utilization is a pattern of three cells which are identified with the three sectors.

**Patentansprüche**

1. Funkkommunikationssystem, das auf einem Codeunterteilungs-Mehrfachzugriffsprotokoll basiert und mit langsamen Frequenzsprüngen (AMRC/SFL), welches System eine bilaterale Kommunikation zwischen Feststationen und beweglichen Stationen erlaubt, wobei jede Feststation eine oder mehrere Zellen abdeckt, wobei die durch ein solches System übertragene Information in digitaler Form durch Modulation eines Trägers codiert ist, dessen Frequenz nacheinander verschiedene Frequenzstufen gemäß einer Folge einnimmt, die einem vorbestimmten Frequenzsprunggesetz gehorchen, wobei diese Frequenzen unter einer Gruppe von Frequenzen ausgewählt sind, die dem gesamten System gemeinsam ist, wobei eine Folge dazu dient, die von einer beweglichen Station ausgesendeten und empfangenen Signale zu identifizieren, wobei dieses System derart ist, daß für eine einer beweglichen Station in einer Zelle zugeteilten Folge die in dieser Zelle oder in einer Gruppe benachbarter Zellen, die diese Zelle enthält, anderen beweglichen Stationen zugeteilte Folgen mit der fraglichen Folge eine Kollisionsquote von Null haben, dadurch gekennzeichnet, daß wenigstens eine Folge, die in den anderen Zellen, d.h. in den Zellen, die weder die fragliche Zelle noch die der fraglichen Zelle benachbarten Zellen sind, zugeteilt ist, mit der fraglichen Folge eine von Null verschiedene Kollisionsquote hat, die jedoch kleiner oder gleich 1/M ist, wobei M die Anzahl der Frequenzen ist, die in den zwei Folgen effektiv verwendet werden.

2. System nach Anspruch 1, dadurch gekennzeichnet, daß die Zellen in Wiederverwendungsmuster genannten Gruppen organisiert sind, wobei jede Zelle durch die Position markiert werden kann, die sie in einem Muster einnimmt, wobei die Maximalzahl an einer Zelle zugeteilten Frequenzen gleich P ist, und daß die in Zellen anderer Positionen verwendeten Folgen eine Kollisionsquote von Null haben und die in den Zellen derselben Position verwendeten Folgen eine von Null verschiedene Kollisionsquote haben, die jedoch kleiner oder gleich 1/P ist.

3. Funkkommunikationssysteme nach Anspruch 1, dadurch gekennzeichnet, daß man aus den digitalen Informationssignalen codierte Signale bildet, die eine gewisse Redundanzquote haben, wobei diese codierten Signale in Datenblöcken organisiert sind, wobei die Daten eines Blocks auf mehrere Frequenzstufen aufgeteilt sind.

4. System nach Anspruch 3, dadurch gekennzeichnet, daß die Redundanzquote zwischen 2 und 3 liegt.

5. System nach Anspruch 1, dadurch gekennzeichnet, daß es eine Einrichtung zur Ermittlung von Inaktivitätsperioden der beweglichen Stationen und/oder der festen Stationen und eine Einrichtung zum Unterdrücken der Aussendung von Frequenzstufen entsprechend diesen Inaktivitätsperioden enthält.

6. System nach Anspruch 2, dadurch gekennzeichnet, daß die Anzahl der Zellen, die ein Muster bilden, kleiner oder gleich 4 ist.

7. System nach Anspruch 2, dadurch gekennzeichnet, daß die Konfiguration der Zellenmuster und die Zuteilungsregeln für die Frequenzfolgen in den verschiedenen Zellen an die Einsatzbedingungen des Systems anpaßbar sind.

8. System nach Anspruch 1, dadurch gekennzeichnet, daß man zusätzliche Folgen verwendet, die jeweils mit irgendeiner anderen Folge des Systems eine Kollisionsquote von weniger als 1/M' zeigen, wobei M' kleiner als M ist.

9. System nach Anspruch 1, dadurch gekennzeichnet, daß man mehrere Folgensätze entsprechend Informationsflüssen mehrere Arten verwendet, wobei die Folgen unvollständig und zeitmultiplexiert verwendet werden.

10. System nach Anspruch 8, dadurch gekennzeichnet, daß die zusätzlichen Folgen, die für die Zeichengebung und/oder für die Daten bestimmt sind, durch die Feststationen den beweglichen Stationen, die sie verlangen, zugeteilt werden.

11. System nach Anspruch 8, dadurch gekennzeichnet, daß die zusätzlichen Folgen, die für die Zeichengebung und/oder die Daten bestimmt sind, den beweglichen Stationen vorzugeteilt werden.

12. System nach Anspruch 1, dadurch gekennzeichnet, daß man auch gemäß dem Protokoll des Mehrfachzugriffs mit Zeitzuteilung (AMRT) arbeitet, das es mehreren beweglichen Stationen, die mit derselben Feststation in Verbindung sind, ermöglicht, dieselbe Folge, aber mit getrennten Frequenzstufen zu verwenden.

13. System nach Anspruch 12, dadurch gekennzeichnet, daß jede Feststation mehrere Sektorantennen enthält, wobei die Station in einem einzigen Sektor zu einem Zeitpunkt sendet und in einem einzigen Sektor zu einem Zeitpunkt empfängt.

14. System nach Anspruch 12, dadurch gekennzeichnet, daß jede bewegliche Station nicht gleichzeitig im Sende- und im Empfangsbetrieb arbeitet.

15. System nach Anspruch 14, dadurch gekennzeichnet, daß jede bewegliche Station gemäß einem Zyklus arbeitet, der eine Sendephase, eine Empfangsphase und eine Ruhephase enthält, wobei letztere für den Frequenzwechsel verwendet wird.

16. System nach einem der Ansprüche 13 bis 15, dadurch gekennzeichnet, daß das Neuverwendungsmuster drei Zellen enthält, die mit den drei Sektoren zusammenfallen.

# FIG.1

AMRF

AMRT

AMRC

# FIG.2

# FIG. 3

(R=1)

(R=2)                    (6,3)

# FIG.4

EP 0 189 695 B1

# FIG.5